# EUROPÄISCHE PATENTANMELDUNG

(11) **EP 4 424 761 A1**
(43) Veröffentlichungstag der Anmeldung: **04.09.2024**
(21) Anmeldenummer: 23159154.6
(22) Anmeldetag: 28.02.2023
(51) Int. Cl.: C08K 3/22, C08K 5/11, H01M 10/613

(54) **HOCHTEMPERATURBESTÄNDIGES KONTAKT- UND FÜLLMATERIAL UND DESSEN VERWENDUNG**

(71) Anmelder: POLYTEC PT GMBH Polymere Technologien, 76307 Karlsbad (DE)
(72) Erfinder: Stößer, Benjamin, 68219 Mannheim (DE); Mayer, Christoph, 76227 Karlsruhe (DE)
(74) Vertreter: LBP Lemcke, Brommer & Partner Patentanwälte mbB

(57) **Zusammenfassung**

Die Erfindung betrifft ein Hochtemperaturbeständiges Kontakt- und Füllmaterial, das aus einer Komponente A und einer Komponente B besteht. Die Komponente A weist folgendes auf: ein auf Polyacrylate basierendes silanfunktionalisiertes Prepolymer oder eine Mischung von silanfunktionalisierten Prepolymeren aufweisend zumindest ein auf Polyacrylate basierendes silanfunktionalisiertes Prepolymer; einen Weichmacher, der ein mehrfachfunktioneller Carbonsäureester ist; ein Netz- und Dispergieradditiv aufweisend zumindest eine Aminzahl größer >20 mg KOH/g, gemessen nach DIN 19645; eine Mischung aus funktionaliserten Organosilanen; ZnO und einen weiteren wärmeleitfähigen Füllstoff oder ein Gemisch aus mehreren wärmeleitfähigen Füllstoffen. Die Komponente B weist folgendes auf: einen Weichmacher, der ein mehrfachfunktioneller Carbonsäureester ist; ein Netz- und Dispergieradditiv aufweisend zumindest eine Aminzahl grö-βer >20 mg KOH/g, gemessen nach DIN 19645; einen wärmeleitfähigen Füllstoff oder ein Gemisch aus mehreren wärmeleitfähigen Füllstoffen Wasser und einen Organometall-Katalysator, einen Antioxidant oder ein Gemisch aus mehreren Antioxidanten. Das Mischungsverhältnis nach Volumen der Komponente A zur Komponente B beträgt 1:1 bis 10:1.

## Beschreibung

Im Betrieb von elektronischen und energietechnischen Systemen entsteht Wärme, die schnell und effektiv aus der Wärme erzeugenden Einheit abgeführt werden muss. Als Beispiel könnte man hier die Elektromobilität nennen, wo insbesondere durch die Verwendung von Festkörperbatteriezellen, sehr hohen Betriebstemperaturen erreicht werden.

Feststoff- oder Festkörperbatteriezellen sind eine neuartige Entwicklung in der Batterietechnik und weisen im Gegensatz zu den heute erhältlichen Li-Ionen und Li-Polymerakkumulatoren statt eines flüssigen Elektrolyten einen festen Elektrolyten auf. Der größte Vorteil dieser neuen Technologieentwicklung ist die höhere potentielle Ladungsdichte, die mit solchen Batterien erreicht werden kann. Diese hohe Ladungsdichte wird teilweise kompensiert durch die momentan noch vergleichsweise niedrige Leistungsdichte verursacht durch die geringere Ladungsdichte typischer Festkörperelektrolyte, wie beispielsweise Glas-Keramik Elektrolyte. Als weitere technisch bedeutsame Vorteile der Festkörperbatterien können die sehr viel schwerere Entflammbarkeit dieser Akkumulatoren genannt werden, als auch das uniformere Verhalten der Akkumulatoren unter extremen Außentemperaturen, so dass das extrem aufwendige Thermomanagement der Batterie, im speziellen die Kühlung einfacher ausgelegt werden kann und nur eine zuschaltbare Heizvorrichtung in Verbindung mit einer passiven Wärmeabführung möglich scheint. Durch die Möglichkeit, die Batterien auch bei höheren Temperaturen zu betreiben, ohne einen Kurzschluss, Beschädigung der Zellen und einen schwer löschbaren Akkumulatorbrand riskieren zu müssen, ergeben sich höhere Anforderungen an die Temperaturbeständigkeit der hierbei eingesetzten wärmeleitfähigen Lösungen.

Für die Wärmeabfuhr und Wärmezufuhr werden auf diesem Gebiet oft thermisch leitfähige Kontakt- und Füllmaterial verwendet, die eine doppelte Rolle haben.

Sie leiten die Wärme weiter und gleichzeitig verbinden sie die aktiven Komponenten miteinander.

Aus der Literatur sind Kontakt- und Füllmaterialien für die Verwendung im Thermomanagement bekannt, die auf silanfunktionalisierten Prepolymeren basieren (WO 2020/165288 A1, US 2015/166859, DE 2018 102 989 B4). Es hat sich aber herausgestellt, dass aufgrund der zunehmend höheren Betriebstemperatur bei Elektrofahrzeugen, klassische Kontakt- und Füllmaterialien, die auf silanfunktionalisierten Prepolymeren basieren, für diese Anwendung aufgrund dessen thermische Instabilität ungeeignet sind, weil sie sich über die Zeit zersetzen und so die gewünschte Funktion über die gesamte Betriebszeit eines solchen Elektroautos nicht gewährleistet werden kann.

Aus diesem Grund werden für Anwendungen bei den sehr hohen Betriebstemperaturen herrschen silikonbasierte Kontakt- und Füllmaterialien verwendet. Silikonhaltige Lösungen haben eine herausragende Temperaturbeständigkeit, sind jedoch aufgrund ihrer negativen Wirkung auf elektronische Schaltkreise und Verbindungen nicht universell einsetzbar. Es ist allgemein bekannt, dass silikonhaltige Basisöle geringe Mengen an flüchtigen Silikonverbindungen enthalten, welche aus dem Basisöl in die Umgebungsluft abgegeben werden können. Diese flüchtigen Silikonverbindungen können auf Oberflächen, welche die aktiven Komponenten umgeben, abgelagert werden. Sofern auf diesen kontaminierten Oberflächen nachfolgend Lackier- oder Klebeprozesse durchgeführt werden sollen, besteht die Gefahr, dass die Haftung der Lack- oder Klebschichten verloren geht. Gelangen die flüchtigen Silikonverbindungen an elektrische Kontakte, werden sie durch Funkenbildung zersetzt und bilden isolierende Oxidschichten, wodurch die Funktion der Kontakte beeinträchtigt oder zerstört wird.

Da die Nachfrage an hochtemperaturbeständigen Kontakt- und Füllmaterialien, die keine oben genannten Nachteile aufweisen, immer größer wird, liegt daher der vorliegenden Erfindung die Aufgabe zugrunde, ein hochtemperaturbeständiges Kontakt- und Füllmaterial bereitzustellen, das die gewünschten Eigenschaften aufweist, um bei sehr hohen Betriebstemperaturen verwendet werden können, gleichzeig aber dem hohen Wärmetransport standhält und eine für diese Anwendung geeignete Viskosität aufweist.

Die der vorliegenden Erfindung zugrundeliegende Aufgabe wurde überraschenderweise durch ein hochtemperaturbeständiges Kontakt- und Füllmaterial mit den Merkmalen des Anspruchs 1 gelöst. Vorteilhafte Weiterbildungen der erfindungsgemäßen Idee sind Gegenstand von Unteransprüchen. Weitere vorteilhafte Weiterbildungen des erfindungsgemäßen Kontakt- und Füllmaterials sind der Beschreibung und den Beispielen zu entnehmen.

Unter der Formulierung "Prepolymer" ist im Sinne der vorliegenden Erfindung jedes Polymer oder Oligomer zu verstehen, welches durch eine spezielle Vorreaktion vorverlängert wurde und/oder welchem durch eine spezielle Vorreaktion neue funktionelle Gruppen eingeführt wurden, die die gewählte Polymerisierungsreaktion in einem weiteren Schritt erst ermöglichen.

Unter dem Begriff "silanfunktionalisiertes Prepolymer" sind im Sinne der vorliegenden Erfindung alkoxysilan-funktionalisierte Oligomere, Polymere oder Prepolymere zu verstehen. Silanmodifizierte Prepolymere kondensieren unter Abspaltung der Alkoxygruppen in Gegenwart von Wasser und bilden weitmaschige Polymernetzwerke. Hier ist aufgrund der oben genannten Definition des Prepolymers nicht entscheidend, ob das Prepolymerrückgrat schon aus einem Prepolymer besteht (z.B. ein polyurethanbasiertes Prepolymer) oder es sich dabei um ein reines Oligomer oder Polymer handelt. Schon durch die spezielle Vorreaktion der Silanfunktionalisierung sind alle silanmodifizierte Polymere auch gleichzeitig Prepolymere gemäß obiger Definition.

Da es kein allgemeiner Konsens in der Nomenklatur und Unterscheidung verschiedener silanmodifizierter Prepolymere besteht, sind alle Arten der kommerziell oder nicht-kommerziell herstellbaren silylisierten Polymere und Prepolymere als silanfunktionalisierte Prepolymere im Sinne der vorliegenden Erfindung angesehen werden.

Unter dem Begriff "Weichmacher" sind im Sinne der vorliegenden Erfindung niedrigviskose, für die gewählte Vernetzungschemie unreaktive Zusätze zu verstehen, die zum einen der Viskositätserniedrigung der Flüssigkomponenten dienen. Nach Aushärtung der Matrix verbleibt dieser Weichmacher innerhalb des Polymernetzwerkes und erniedrigt dort die Mechanik des ausgebildeten Polymers, so dass dieser weicher, elastischer, flexibler und/oder dehnbarer wird, da die typischerweise sehr offenvernetzten Polymernetzwerke durch den enthaltenen Weichmacher eine höhere Beweglichkeit besitzen. Chemisch gesehen ist der Weichmacher nicht kovalent in die Polymermatrix eingebunden, interagiert jedoch mit seinen polaren Gruppen mit dem polaren Gruppen des Polymernetzwerks und lagert sich so zwischen den Polymerketten an, so dass diese eine höhere Beweglichkeit besitzen und die gesamte Struktur flexibler wird. Weichmacher sind tendenziell niedrigmolekular, es können jedoch auch polymere Weichmacher eingesetzt werden, z.B. auf Basis von Polypropyleneglykol. Typische Beispiele von Weichmacher sind Stoffe basierend auf der Chemie der Carbonsäureester, fette Öle, Weichharze und Campher.

Unter dem Begriff "Netz- und Dispergieradditive" sind im Sinne der vorliegenden Erfindung Additive zu verstehen, welche die Eigenschaft übernehmen, zwei miteinander nicht kompatible Substanzen miteinander zu vermischen. Dies ist üblicherweise aus den flüssig-flüssig Systemen unter der Bildung von Emulsionen bekannt. Es ist jedoch bei der Bildung von stabilen flüssig-fest Systemen ebenfalls von hoher Bedeutung. Durch die Kompatibilisierung der Grenzflächenspannung und der besseren Benetzung der Feststoffpartikel mit dem Flüssigmedium wird eine Stabilisierung dieser Dispersion erreicht. Diese Additive werden eingesetzt, um die Feststoffe möglichst gut, idealerweise vollständig mit der Flüssigphase zu benetzen, was auch die benötigte Scherwirkung für die Auftrennung der Agglomerate in die Einzelpartikel während der Herstellung erleichtert. Zusätzlich, verbleibt das Netz- und Dispergieradditiv auf der Partikeloberfläche und stabilisiert diesen in der Flüssigphase, so dass entweder eine stabile Dispersion entsteht, oder zumindest eine Reagglomeration und folglich ein schnelles Absetzen/Sedimentieren dieser Füllstoffe so weit wie möglich vermieden wird. Dadurch, dass die Netz- und Dispergieradditive als Tenside dienen und ein Teil dieser amphiphilen Moleküle oder Polymere gut in der flüssigen Phase löslich sind, wird eine Stabilisierung der Partikel auch aufgrund des ausgeprägten sterischen Effekts dieser Ketten um die Partikeloberfläche erklärt, welches bei einer starken Annäherung dieser Partikel aneinander eine repulsive Kraft erfährt, so dass die Partikel immer eine gewisse Distanz zueinander einhalten müssen und somit eine mechanische Interaktion (z.B. Agglomerierung, Reibungseffekte der Partikel, die zu einer höheren Viskosität führen würden etc.) minimiert. Dieser Effekt kann entweder durch die sterische Abstoßung erfolgen, oder in einem ähnlichen Prinzip durch eingebrachte Ladungen via chemischer Funktionalitäten (Carboxylate, Ammoniumgruppen etc.), welche durch deren elektrostatischen Abstoßung untereinander den gleichen Effekt erzielen, wobei man beide Wirkungsweisen auch kombinieren kann und somit eine elektrosterische Stabilisierung der Partikel erreicht. Generell kann man sagen, dass elektrostatische und elektrosterische Abstoßung sehr gut für relativ polare Flüssigkeiten funktioniert, wohingegen sterische Abstoßung alleine meistens für sehr unpolare Flüssigkeiten verwendet wird.

Unter dem Begriff "Antioxidantien" sind im Sinne der vorliegenden Erfindung chemische Verbindungen zu verstehen, die die Oxidation von anderen Substanzen verlangsamen oder gänzlich verhindern. Sie wirken meist als Radikalfänger und inaktivieren so Abbauvorgänge, die radikalisch initiiert sind und verhindern so den oxidativen Abbau der enthaltenen organischen Verbindungen. Sie werden im Klebstoffbereich den Formulierungen zugesetzt, um eine höhere Stabilität der ausgehärteten Polymere gegen harsche Anwendungsbedingen zu erreichen. Dies können z.B. hohe Temperatur unter Vorhandensein von Luftsauerstoff sein, welche zu radikalischen Abbaukaskaden führen. Solche Radikalischen Abbaukaskaden werden meist durch Antioxidantien abgebrochen oder stark verlangsamt, indem die enthaltenen Antioxidantien z.B. sterisch gehinderte Phenolgruppen sehr reaktionsträge, stabilisierte Radikale ausbilden und somit die weitere Übertragung der Radikale auf weitere Polymergruppen unterbinden und werden normalerweise primäre Antioxidantien genannt. Andere Arten von Antioxidantien können z.B. auch Reduktionsmittel sein, die früher oxidiert werden als die zu schützende Substanz und können auch in Kombination eingesetzt werden. Sogenannte sekundäre Antioxidantien können ebenso zugesetzt werden und umfassen z.B. Phosphitverbindungen, die Peroxide zerstören und somit die Polymerkette vor oxidativem Angriff schützen, oder auch Thioester-Antioxidatien oder aminbasierte Systeme.

Unter dem Begriff "Organosilane" sind im Sinne der vorliegenden Erfindung chemische Verbindungen zu verstehen, die eine Silylgruppe mit mindestens einem organischen Rest und eins bis drei hydrolysierbare Substituenten oder Hydroxylgruppen aufweisen. Hydrolysierbare Gruppen sind zum Beispiel Alkoxygruppen. Es können oligomere Ethylenglykolketten oder Acetoxyfunktionen sein. Reaktive Silangruppen sind vollständig oder partiell hydrolysierte Alkoxysilangruppen, welche dann Silanolgruppen bilden. Es gibt viele verschiedene Arten solcher Organosilane, welche sich vor allem im Aufbau des organischen Rests unterscheiden und durch ihre chemische Struktur beschrieben werden. Als Beispiel können Hydroxysilane, Isocyanatosilane, Aminosilane, Thiosilane, Vinylsilane genannt werden, die jeweils eine organische Kette zwischen der Silylgruppe und mindesten eine weitere Funktionalität aufweisen. Es gibt natürlich Organosilane aufweisend mehr als eine Funktionalität wie z.B. Aminosilane, die eine sekundäre und eine primäre Aminogruppe enthalten oder Organoalkoxysilane, die in dem organischen Teil mindestens eine Hydroxylgruppe (OH), Isocyanatgruppe, Aminogruppe oder eine Vinylgruppe aufweisen.

In Bezug auf die enthaltene(n) Funktionalität(en) kann man Organosilane in folgende Gruppen unterteilen:
- Ohne weitere Funtkionalität (organische Kette) z.B. Octyltrimethoxysilan, OCTMO;
- Primäre Aminfunktionalität z.B. 3-Aminopropyltrimethoxyssilan, AMMO;
- Sekundäre Aminofunktionalität z.B. N-(n-butyl)-3-aminopropyl- trimethoxysilan,
- Diaminofunktionell z.B. N-(2-Aminoethyl)-3-aminopropyltrimethoxysilane, DAMO;
- Epoxyfunktionell z.B. 3-glycidyloxy-propyl-trimethoxysilan, GLYMO;
- Thiofunktionell z.B.3-mercaptopropyl-trimethoxysilan, MTMO;
- Methacrylfunktionell z.B. 3-methacryloxypropyltrimethoxysilan, MEMO;
- Vinylfunktionell z.B. Vinyltrimethoxysilan, VTMO.

Die genannten chemisch und kommerziell erhältlichen Verbindungen in jeweiligen Gruppen dienen ausschließlich als Beispiele und die Gruppen sind nicht auf diese beschränkt.

Unter dem Begriff "wärmeleitfähiger Füllstoffe" sind im Sinne der vorliegenden Erfindung chemische Verbindungen zu verstehen, die Formulierungen zugefügt werden, um die Füllung zu gewehrleisten und gleichzeitig wärmeleitend sind. Typische Wärmeleitfähige Füllstoffe sind:
- Metalle, die aber wegen elektrischer Leitfähigkeit für viele Anwendungen ungeeignet sind;
- Aluminiumoxid/-hydroxid, und
- Magnesiumoxid/-hydroxid sowie

Diamant, Carbonnanotubes, Aluminiumnitrid (AIN), Bornitrid (BN) Graphit.

Unter dem Begriff "Katalysator" sind im Sinne der vorliegenden Erfindung chemische Verbindungen zu verstehen, die die Geschwindigkeit einer Reaktion erhöhen, bzw. deren Aktivierungsenergie durch die Ausbildung einer Zwischenstufe zwischen dem Katalysator und den Reaktanden herabsetzen, ohne sich selber in der Reaktion zu verbrauchen.

Das erfindungsgemäße hochtemperaturbeständige Kontakt- und Füllmaterial umfasst eine Komponente A und eine Komponente B besteht, wobei
die Komponente A folgendes aufweist:
   1.A) ein auf Polyacrylate basierendes silanfunktionalisiertes Prepolymer oder eine Mischung von silanfunktionalisierten Prepolymeren aufweisend zumindest ein auf Polyacrylate basierendes silanfunktionalisiertes Prepolymer;
   2.A) einen Weichmacher, der ein mehrfachfunktioneller Carbonsäureester ist;
   3.A) ein Netz- und Dispergieradditiv aufweisend zumindest eine Aminzahl größer >20 mg KOH/g gemessen nach DIN 19645;
   4.A) eine Mischung aus funktionalisierten Organosilanen;
   5.A) ZnO und einen weiteren wärmeleitfähigen Füllstoff oder ein Gemisch aus mehreren wärmeleitfähigen Füllstoffen; und wobei
   die Komponente B folgendes aufweist:
   1.B) einen Weichmacher, der ein mehrfachfunktioneller Carbonsäureester ist;
   2.B) ein Netz- und Dispergieradditiv aufweisend zumindest eine Aminzahl größer >20 mg KOH/g gemessen nach DIN 19645;
   3.B) einen wärmeleitfähigen Füllstoff oder ein Gemisch aus mehreren wärmeleitfähigen Füllstoffen;
   4.B) Wasser;
   5.B) einen Organometall-Katalysator;
   6.B) einen Antioxidant oder ein Gemisch aus mehreren Antioxidanten; und wobei
das Mischungsverhältnis nach Volumen der Komponente A zur Komponente B 1:1 bis 10:1 beträgt.

Das erfindungsgemäße Kontakt- und Füllmaterial zeigt überraschenderweise eine sehr hohe Wärmebeständigkeit. Überraschenderweise wurde gefunden, dass die Verwendung von einer Kombination aus ausgewählten silanmodifizierten Prepolymeren und Antioxidantien, die Temperaturresistenz dieser Technologie stark verbessert und so diese für Anwendungen bei höheren Temperaturen geeignet und zum Empfehlen sind. Ebenfalls wurde eine geeignete Viskosität des erfindungsgemäßen Kontakt- und Füllmaterials überraschenderweise erreicht. Die Polyacrylate basierenden silanfunktionalisierten Prepolymere der Komponente A weisen selbst eine sehr hohe Viskosität auf, deswegen die Befürchtung vorlag, dass die zu erreichende Viskosität nicht erzielt werden könnte. Wider Erwarten zeigt das erfindungsgemäße Kontakt- und Füllmaterial die gewünschten Eigenschaften, nämlich eine sehr gute Temperaturbeständigkeit, um bei sehr hohen Betriebstemperaturen verwendet werden können, sehr gute Leistung bei Wärmetransport und eine für diese Anwendung geeignete Viskosität.

Eine vorteilhafte Weiterbildung des hochtemperaturbeständigen Kontakt- und Füllmaterials sieht vor, dass die Mischung von silanfunktionalisierten Prepolymeren zusätzlich zumindest ein auf Polyurethane und / oder Polyol / Diol basierte silanfunktionalisierte Prepolymere aufweist.

Der Oberbegriff des silanfunktionalisierten Prepolymers umfasst in Sinne der vorliegenden Erfindung eine Verbindung der folgenden Formel:

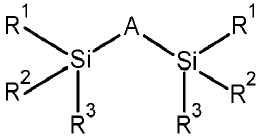

Bei A in der oben genannten Formel handelt es sich um einen polymeren odas Prepolymeren Backbone (Rückgrat), welcher als Basis
- ein Polyol-/Diol (z.B. Polyetherpolyol/-diol, Polypropyleneglykol),
- ein telechele Polyacrylate hat oder
- selbst Prepolymere basierend auf verschiedenen Technologien, z.B. ein Polyurethan-modifziertes Prepolymer sein kann, welches in einem weiteren Reaktionsschritt mit alkoxy-geschützten Silangruppen modifiziert.

Die Substituenten R¹, R² und R³ können im Sinne der vorliegenden Erfindung chemische Gruppen sein, wobei mindestens R¹ und R² eine Alkoxygruppe und R³ entweder eine Alkoxygruppe oder eine Alkylgruppe ist.

Als Alkylgruppe ist im Sinne der vorliegenden Erfindung eine C₁-C₁₀-Alkyl Gruppe zu verstehen. C₁-C₁₀-Alkyl umfasst im Sinne der vorliegenden Erfindung lineare oder verzweigte gesättigte Kohlenwasserstoffgruppen mit einem bis zehn Kohlenstoffatomen. Hierunter fallen insbesondere Methyl, Ethyl, n-Propyl, Isopropyl, n-butyl, sec-Butyl, iso-Butyl, tert-Butyl, n-Pentyl, iso-Pentyl, 2,2-Dimethylpropyl, n-Hexyl, iso-Hexyl, 2-Ethylhexyl, n-Heptyl, iso-Heptyl, n-Octyl, isoOctyl, n-Nonyl, n-Decyl und dergleichen.

Als Alkoxygruppe ist im Sinne der vorliegenden Erfindung eine O-C₁-C₁₀-Alkyl Gruppe zu verstehen. C₁-C₁₀ Alkyl ist wie oben definiert.

Eine weitere vorteilhafte Weiterbildung des hochtemperaturbeständigen Kontakt- und Füllmaterials sieht vor, dass die Alkoxygruppe ausgewählt ist aus: OCH₃ und OCH₂CH₃ und die Alkylgruppe CH₃ ist.

Eine weitere besonders vorteilhafte Weiterbildung des hochtemperaturbeständigen Kontakt- und Füllmaterials sieht vor, dass die Alkoxygruppe OCH₃ und die Alkylgruppe CH₃ ist.

Eine weitere vorteilhafte Weiterbildung des hochtemperaturbeständigen sieht vor, dass ein silanfunktionalisiertes Prepolymer oder eine Mischung der silanfunktionalisierten Prepolymere aus folgenden Gruppen ausgewählt wird:

### - Gruppe A

Diese Gruppe umfasst Prepolymere, die auf einem Backbone (Rückgrat) mit Polyol/Diol basieren und sind unter folgenden chemischen Namen bekannt: silylmodified polymers (SMP), modified-silane polymers, MS polymers, silane-terminated polymers.

Kommerziell erhältliche Prepolymere, die zu diese Gruppe gehören, sind zum Beispiel:
Dimethoxysilane MS Polymer S (e.g. S303H) und high strength Dimethoxysilane MS Polymer SAX (e.g. SAX 350).

Am meisten bevorzugt für das hochtemperaturbeständige Kontakt- und Füllmaterial ist das Prepolymer der Formel A-1:

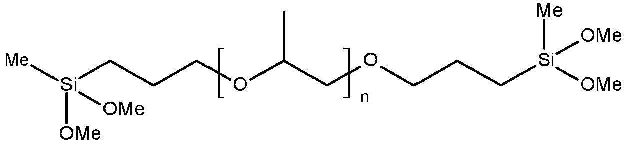

### - Gruppe B

Diese Gruppe umfasst silanfunktionalisierte Prepolymere mit telechelen Polyacrylaten als Backbone.

Kommerziell erhältliche Polymere, die zu dieser Gruppe gehören, sind zum Beispiel: Kaneka XMAP SA (e.g. Kaneka XMAP SA100).

Am meisten bevorzugt für das hochtemperaturbeständige Kontakt- und Füllmaterial ist das Prepolymer der Formel B-1: 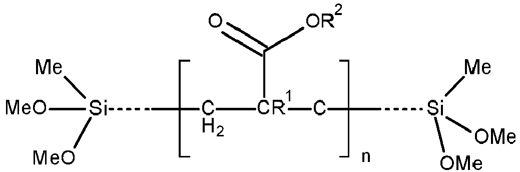
R¹ ist H, C₁-C₆-alkyl;
R² ist H, C₁-C₆-alkyl

### - Gruppe C

Die Gruppe C umfasst Prepolymere, in denen der Polymerbackbone selbst aus einem PU-Prepolymer besteht und somit Urethangruppen enthält. Die verwendeten Polyole im Backbone können jeweils wie gezeigt aus Polyetherpolyolen bestehen, aber auch andere "Polyole" sind möglich.

Diese Prepolymere sind unter folgenden chemischen Namen bekannt: silane-terminated polyurethane (SPU or STPU), silane-terminated PU, silane-modified PU.

Kommerziell erhältliche Prepolymere, die zu dieser Gruppe gehören, sind zum Beispiel: Polymer ST (e.g. Polymer ST 44) und Geniosil STP-E (e.g. Geniosil STP-E30).

Eine weitere vorteilhafte Weiterbildung des hochtemperaturbeständigen Kontakt- und Füllmaterials sieht vor, dass ein oder mehrere silanfunktionalisierte Prepolymere aus der folgenden Gruppe ausgewählt werden:
SAX 350, SAX 015 (Gruppe A)
XMAP SA120S (Gruppe B).

Eine weitere vorteilhafte Weiterbildung des hochtemperaturbeständigen Kontakt- und Füllmaterials sieht vor, dass der Weichmacher ein mehrfachfunktioneller Carbonsäureester ist.

Eine weitere vorteilhafte Weiterbildung des hochtemperaturbeständigen Kontakt- und Füllmaterials sieht vor, dass der Weichmacher der Komponente A ein trifunktioneller Carbonsäureester ist.

Eine weitere vorteilhafte Weiterbildung des hochtemperaturbeständigen Kontakt- und Füllmaterials sieht vor, dass der Weichmacher der Komponente A ein Trister der Trimellitsäure ist.

Eine weitere vorteilhafte Weiterbildung des hochtemperaturbeständigen Kontakt- und Füllmaterials sieht vor, dass der Weichmacher der Komponente B einen trifunktionellen Carbonsäureester aufweist.

Im Sinne der vorliegenden Erfindung können als Weichmacher Phthalsäureester wie z.B. Diethylhexylphthalat oder Dioctylphthalat verwendet werden, wobei Phthalsäureester aufgrund ihrer teilweise schädlichen Wirkung auf den Menschen momentan auf der Kandidatenliste der besonders besorgniserregenden Stoffe der ECHA, SVHC-Liste stehen. Als Ersatz für die Phthalsäureester können Alkylsulfonsäureester als auch zitronensäurebasierte Weichmacher, z.B. Zitronensäuretriethylester oder Adipinsäurebasierte Weichmacher, beispielsweise Diethylhexyladipat oder Diethyloxtyladipat, verwendet werden.

Die Auswahl des entsprechenden Weichmachers soll basierend auf deren Funktion bei dem erfindungsgemäßen hochtemperaturbeständigen Kontakt- und Füllmaterial getroffen werden, wobei es anzumerken ist, diese nicht alle Deckungsgleich mit der Verwendung von Weichmacher in anderen Formulierungen sind. In dem erfindungsgemäßen hochtemperaturbeständigen Kontakt- und Füllmaterial hat der Weichmacher folgende Aufgaben:

### - Erniedrigung der Viskosität der Flüssigkomponenten

Typischerweise sind silylfunktionalisierte Prepolymere höherviskose Rohstoffe, auch wenn man typischerweise niedrigviskose Systeme zur Formulierung der Rezeptur auswählt. Trotz allem hängt der erreichbare Füllgrad mit den thermisch leitfähigen Füllstoffen direkt mit der Mischviskosität der Flüssigkomponenten zusammen. Aus diesem Grund alleine sind niedrigviskose Zuschläge notwendig, welche die Mischviskosität der Flüssiganteile so weit wie möglich erniedrigen, um die notwenigen Füllgrade mit den thermisch leitfähigen Füllstoffen zu erreichen, ohne die Viskosität der fertigen Formulierung zu hoch für die Anwendung werden zu lassen.

### - Erhöhung der Flexibilität im ausgehärteten Material

Durch den sehr hohen Füllstoffanteil verliert das Polymernetzwerk an Freiheitsgraden und die im ungefüllten Zustand sehr flexible Matrix mit hoher Bruchdehnung wird immer unflexibler und die Bruchdehnung sinkt typischerweise auf sehr niedrige Werte. Durch die Verwendung des Weichmachers erfolgt zum einen eine bessere interne Benetzung des Füllstoffs, indem sich die Weichmachermoleküle nicht nur wie oben definiert zwischen den Polymerketten anlagern, sondern idealerweise auch zwischen den Füllstoffpartikeln und den Polymerketten eine Kompatibilitätsschicht bilden und zusätzlich so den Freiheitsgrad der durch die Füllstoffpartikel stark eingeengten Polymerketten stark erhöht.

Typischerweise haben silanfunktionalisierte Prepolymere eine hohe Molekularmasse, meist durch den langen (pre-)polymeren Backbone. Durch diesen Backbone werden die Vernetzungspunkte stark voneinander getrennt, so dass ein weitmaschiges, flexibles Netzwerk entsteht, welches z.B. für flexible Klebstoffe und/oder Dichtmassen geeignet ist. Wie im ersten Punkt dargelegt, ist die Viskosität dieser silanfunktionalisierten Prepolymere von extremer Wichtigkeit für die Anwendung, so dass nur niedrigviskose Typen überhaupt für die Anwendung vollumfänglich in Frage kommen. Da jedoch ein höhermoleukularer Backbone auch mit einem Viskositätsanstieg des Prepolymers einhergeht sind typischerweise niedrigmolekulare silanfunktionalisierte Prepolymere für die Anwendung geeignet. Diese gehen natürlich auch mit einer höheren Vernetzungsdichte und folglich mit einer höheren Mechanik, niedrigeren Flexibilität einher, welche durch den im obigen Punkt dargestellten Effekt des hohen Füllgrades noch verstärkt wird. Dies versucht man durch den Einsatz von Weichmacher auszugleichen, indem man den definierten "Weichmachereeffekt" zwischen den ausgehärteten Prepolymeren und zusätzlich den Füllstoffpartikeln ausnutzt (siehe zweiter Punkt), aber auch indem man den Volumenanteil an eingesetztem Prepolymer auf ein Minimum reduziert. Dies kann natürlich dazu führen, dass sich ein nichtvollständig ausgebildetes Polymernetzwerk ausbildet, indem nicht alle Polymerketten vollständig vernetzt vorliegen. Dies resultiert in einem weitmaschiger aufgespannten Polymernetzwerk, welches die Nachteile der verwendeten niedrigmolekularen silanfunktionalisierten Prepolymere zumindest teilweise aufhebt und das Netzwerk flexibler, niedrigmoduliger und auf eine niedrigere Mechanik trimmt, wie es auch die Verwendung von langkettigen, silanfunktionalisierten Prepolymeren ermöglichen würde.

In Anbetracht der oben genannten Ausführungen haben sich für das erfindungsgemäße hochtemperaturbeständige Kontakt- und Füllmaterial haben sich als besonders geeignet folgende Weichmacher erwiesen:
Oxsoft 3G8: CAS 94-28-0
   - Triethylenglykol-di-(2-ethylhexanoat)
   - 2,2'-Ethylendioxydiethylbis(2-ethylhexanoat)
Cereplas L810TM: CAS 90218-76-1
   - 1,2,4-Benzoltricarbonsäure, gemischter Decyl- und Octyltriester
Oxsoft TOTM LE: CAS 3319-31-1
   - Tris(2-ethylhexyl)benzol-1,2,4-tricarboxylat
   - Trioctyltrimellitat.

Eine weitere vorteilhafte Weiterbildung des hochtemperaturbeständigen Kontakt- und Füllmaterials sieht vor, dass die Komponente A einen Antioxidant oder ein Gemisch aus mehreren Antioxidanten aufweist. Beispiele finden sich in den Portfolios typischer Antioxidantien-Hersteller, zum Beispiel ADK Stab^{®} der Adeka Polymer Additives.

Eine weitere vorteilhafte Weiterbildung des hochtemperaturbeständigen Kontakt- und Füllmaterials sieht vor, dass das Netz- und Dispergieradditiv zumindest funktionelle aminische Gruppen aufweist, welches auch optional saure Gruppen, wie Carboxylat- oder Phosphorgruppen enthalten kann.

Besonders bevorzugt sind: Disperbyk 2157 oder Byk W969.

Die Gemeinsamkeiten von Disperbyk 2157 und Byk W969 belaufen sich auf gemeinsame aminische Gruppen, welche mindestens durch das Vorhandensein einer Aminzahl nach DIN 16945 im Netz- und Dispergieradditiv definiert ist. Natürlich können auch optional weitere funktionelle Gruppen, wie Phosphorgruppen oder Carboxylatgruppen enthalten sein, welche auch noch oberflächenaktiv wirken können. Optional können die Netz- und Dispergieradditive zusätzlich eine Säurezahl gemessen nach DIN EN ISO 2114 enthalten.

Als besonders relevant werden Netz- und Dispergieradditive benannt, welche mindestens eine Aminzahl von >20 mg KOH/g aufweisen und welche optional zusätzlich eine Säurezahl aufweisen können.

Eine weitere vorteilhafte Weiterbildung des hochtemperaturbeständigen Kontakt- und Füllmaterials sieht vor, dass die Komponente A eine Mischung aus funktionaliserten Organosilanen aufweist.

Im Sinne der vorliegenden Erfindung sind hier mono- und multifunktionelle Organosilane zu verstehen. Die multifunktionelle Oranosilane, welche als oligomere oder vorkondensierte Silane vorliegen und somit in oligomerer Form aufgrund der hohen Funktionalitätsdichte schneller reagieren können, als auch die lokale Vernetzungsdichte des aushärtenden Polymers stärker erhöhen oder auch eine bessere Anbindung des Klebstoffs an Oberflächen ermöglichen.

Zuerst dienen alle genannten Organosilane als Vernetzer. Sie werden in das in das Netzwerk der silanfunktionalisierten Prepolymere eingebaut und damit erhöhen sie die Vernetzungsdichte das Prepolymere. Die funktionellen Gruppen, die sie enthalten, sind ausschlaggebend für die Funktion in einer Formulierung.

Eine weitere vorteilhafte Weiterbildung des hochtemperaturbeständigen Kontakt- und Füllmaterials sieht vor, dass folgende Organosilane verwendet werden:
In den Formulierungen relevant sind folgende Organosilane inkl. Funktionsweise:

### a) aminofunktionnalisierte Organosilane

Sie haben generell eine beschleunigende Wirkung auf die Silankondensationsreaktion und werden neben den generellen Eigenschaften als Co-Katalysator mit eingesetzt. Des Weiteren haben sie ähnlich wie epoxyfunktionelle Organosilane eine haftungsverbessernde Wirkung für verschiedene Substrate.

Eine weitere besonders vorteilhafte Weiterbildung des hochtemperaturbeständigen Kontakt- und Füllmaterials sieht vor, dass:
- AMMO oder
- Oligomere, vorkondensierte Silane mit Amingruppen, z.B. aus der Reihe Dynasylan^{®} SIVO
verwendet werden.

### b) vinylfunktionelle Organosilane

Sie haben vorwiegend eine trocknende Wirkung. Die im Produktionsverfahren eingesetzten Füllstoffe und Weichmacher haben eine bestimmte Restfeucht bzw. Wassergehalt, der zwar sehr niedrig ist, jedoch die Lagerstabilität der Silanfunktionalisierten Prepolymere negativ beeinflusst, indem eine ungewollte Silankondensation über die Zeit stattfindet, was zu einer starken Viskositätserhöhung und damit zu einer Verminderung der Applikationseigenschaften führen kann. Um es zu trocknen werden die vinylfunktionellen Organosilane der Formulierung hinzugefügt und so werden die Füllstoffe und andere Formulierungsbestandteile *in situ* getrocknet. Der kleine Anteil an unreaktiven vinylfunktionellen Organosilane verbleibt in der Formulierung und ermöglicht so eine praktikable Lagerstabilität der Formulierung ohne Spezialequipment, wie Produktion und Überlagerung der Komponenten unter Inertgas, Vortrocknung der Füllstoffe in speziellen Trocknern.

Eine weitere besonders vorteilhafte Weiterbildung des hochtemperaturbeständigen Kontakt- und Füllmaterials sieht vor, dass VTMO verwendet wird.

### c) epoxyfunktionelle Organosilane

Neben den generell beschriebenen Eigenschaften hat das Epoxysilan weitere interessante Eigenschaften, für die es in die Formulierungen zugesetzt wird. Zum einen können epoxy- und aminfunktionelle Silane miteinander reagieren (neben der Silankondensation) und so auch Querverbindungen schaffen. Desweiteren sind Epoxysilane für ihre guten haftverbessernden Eigenschaften auf einer ganzen Reihe von verschiedenen Oberflächenchemien bekannt (von polymeren Oberflächen bis hin zu metallischen Oberflächen) und hilft so ein ausgeglichenes Produkteigenschaftenprofil zu erreichen.

Eine weitere besonders vorteilhafte Weiterbildung des hochtemperaturbeständigen Kontakt- und Füllmaterials sieht vor, dass die Mischung der funktionalisierten Organosilanen zumindest einen aminofunktionalisierten oder einen vinylfunktionalisierten oder einen epoxyfunktionalisierten Organosilan aufweist.

Eine weitere besonders vorteilhafte Weiterbildung des hochtemperaturbeständigen Kontakt- und Füllmaterials sieht vor, dass die Mischung der funktionalisierten Organosilanen zumindest zwei Organosilane umfasst, die ausgewählt sind aus der Gruppe bestehend aus: einem aminofunktionalisierten, einen vinylfunktionalisierten und einem epoxyfunktionalisierten Organosilan.

Eine weitere besonders vorteilhafte Weiterbildung des hochtemperaturbeständigen Kontakt- und Füllmaterials sieht vor, dass die Mischung der funktionalisierten Organosilanen zumindest einen aminofunktionalisierten und einen vinylfunktionalisierten Organosilan aufweist.

Eine weitere besonders vorteilhafte Weiterbildung des hochtemperaturbeständigen Kontakt- und Füllmaterials sieht vor, dass die Mischung der funktionalisierten Organosilanen einem aminofunktionalisierten, einen vinylfunktionalisierten und einem epoxyfunktionalisierten Organosilan aufweist.

Eine weitere besonders vorteilhafte Weiterbildung des hochtemperaturbeständigen Kontakt- und Füllmaterials sieht vor, dass mindestens eines der funktionaliserten Organosilane ein oligomeres Silan ist.

Eine weitere besonders vorteilhafte Weiterbildung des hochtemperaturbeständigen Kontakt- und Füllmaterials sieht vor, dass GLYMO verwendet wird.

Eine weitere besonders vorteilhafte Weiterbildung des hochtemperaturbeständigen Kontakt- und Füllmaterials sieht vor, dass zwingend Zinkoxid als Füllstoff verwendet wird.

Eine weitere vorteilhafte Weiterbildung des hochtemperaturbeständigen Kontakt- und Füllmaterials sieht vor, dass zusätzlich zu ZnO ein wärmeleitfähige Füllstoff verwendet wird, der ausgewählt ist aus Gruppe bestehend aus: Al(OH)₃, Al₂O₃.

Eine weitere vorteilhafte Weiterbildung des hochtemperaturbeständigen Kontakt- und Füllmaterials sieht vor, dass die Gesamtmenge der Füllstoffe in den Komponenten A und B 80 bis 95 Gew.-%, bevorzugt 88 bis 93 Gew.-%, noch mehr bevorzugt 88 bis 90 Gew.-% beträgt, wobei der Anteil an ZnO in der Mischung der Füllstoffe dementsprechend 10 bis 30 Gew.-%, bevorzugt 15 bis 25 Gew.-% noch mehr bevorzugt 15 bis 20 Gew.-% beträgt.

Eine weitere vorteilhafte Weiterbildung des hochtemperaturbeständigen Kontakt- und Füllmaterials sieht vor, dass zumindest einer der wärmeleitfähigen Füllstoffe eine Oberflächenbeschichtung und /oder Oberflächenfunktionalisierung aufweist, die vorzugsweise hydrophob ist.

Wie es bekannt ist, reagieren silanfunktionalisierte Prepolymere in einer Kondensationsreaktion und Anwesenheit von Wasser. Das Wasser für diese Reaktion wird üblicherweise vorwiegend durch die Füllstoffe eingetragen. Wie oben detailliert beschrieben, sind diese aufgrund der Luftfeuchtigkeit oberflächlich zumindest teilweise mit Wasser belegt. Ferner speichern die Füllstoffpartikel durch Poren- und Kapillareffekte das Wasser in Poren und Rissen.

Die Füllstoffe können durch die Zugabe von vinylfunktionellen Organosilanen getrocknet werden, wie eine Ausgestaltung der vorliegenden Erfindung es vorsieht. In solchen Fall muss jedoch die benötigte Menge an dem vinylfunktionellen Organosilan je nach Wassergehalt der Füllstoffe angepasst werden. Wenn die Füllstoffe nicht ausreichend getrocknet werden, wird dadurch die Lagerstabilität der fertig formulierten Komponente durch einen langsamen Viskositätsanstieg der Flüssigkomponente beeinflusst, der vor allem aufgrund beginnender langsamer Kondensationsreaktionen der Polymere stattfindet.

Dies kann man formulatorisch umgehen, indem man Füllstoffe einsetzt, die teilweise hydrophobisiert sind. Hydrophobisierung von Füllstoffen ist ein großindustriell angewendeter Prozess, indem die Füllstoffe so gut wie möglich mit oberflächenaktiven Molekülen oder Polymeren beschichtet werden. Hierfür werden in Abhängigkeit von dem Füllstoff beispielsweise Fettsäuren, Organosilane, Organotitanate, funktionalisierte oder unfunktionalisierte Polymere eingesetzt, so dass sowohl eine Chemisorption, als auch eine Physisorption dieser Beschichtungsadditive an der Oberfläche eine praktikable Möglichkeit der Oberflächenfunktionalisierung darstellt.

Diese sehr dünne Beschichtung macht die Füllstoffoberflächen hydrophober, so dass nur ein weit geringerer Anteil an Wasser aus der Luftfeuchtigkeit sich an die Füllstoffe anlagern kann und die Füllstoffe somit eine geringere Restfeuchtigkeit enthalten. Dies führt dazu, dass bei einer optimalen Auswahl dieser Beschichtungsagenzien ähnliche Effekte erzielt werden, wie mit den beschriebenen Netz- und Dispergieradditiven, die man in solchen Fall nicht benötigt.

Eine weitere vorteilhafte Weiterbildung des hochtemperaturbeständigen Kontakt- und Füllmaterials sieht vor, dass die Komponente B einen Katalysator aufweist.

Eine weitere besonders vorteilhafte Weiterbildung des hochtemperaturbeständigen Kontakt- und Füllmaterials sieht vor, dass der Katalysator ein metallorganischer Komplex ist. In Frage kommen alle gängigen auf dem Markt zugänglichen Organometall-Katalysatoren. Als Beispiel werden hier die Zinn-Komplexe genannt, wobei diese Erfindung nicht auf diese beschränkt ist. Als geeignete Katalysatoren werden hier folgende bevorzugt: Dibutylzinndilaurat (DBTL), Dioctylzinndilaurat, dessen Oxide wie Dibutylzinnoxid, Dioctylzinnoxid oder andere Zinn-Komplexe mit zusätzlich ausgetauschten Liganden wie z.B. Dioctylzinn Diacetylacetonat oder auch Dioxtylzinn/Dibutylzinn-Silankomplexe .

Eine weitere besonders vorteilhafte Weiterbildung des hochtemperaturbeständigen Kontakt- und Füllmaterials sieht vor, dass der Katalysator eine Co-Katalysatoren Base wie z.B. Amine als Protonenakzeptoren sein kann. Diese werden typischerweise als aminofunktionelle Organosilane in der Formulierung eingesetzt und sind unter der Beschreibung der Organosilane zusammengefasst.

Eine weitere besonders vorteilhafte Weiterbildung des hochtemperaturbeständigen Kontakt- und Füllmaterials sieht vor, dass der Katalysator ein säurekatalysiertes System ist.

Eine weitere besonders vorteilhafte Weiterbildung des hochtemperaturbeständigen Kontakt- und Füllmaterials sieht vor, dass es silikonfrei ist.

Diese Maßnahme hat den Vorteil, dass dadurch sichergestellt wird, dass in dem System keine flüchtigen Silikonverbindungen auf Oberflächen, welche die aktiven Komponenten umgeben, abgelagert werden. Damit wird vermieden, dass zum einen die Haftung der Lack- oder Klebschichten der kontaminierten Oberflächen beeinträchtigt wird. Zum anderen werden auch die elektrischen Kontakte dadurch geschützt.

Die Erfindung wird nachfolgend durch Beispiele illustriert, wobei sie nicht auf diese beschränkt ist.

### Beispiel 1 - Herstellung der Komponente A und der Komponente B

Die in der Tabelle 1 genannten Rohstoffe wurden in einem Speedmixerbecher eingewogen und 30 Sekunden bei einer Drehzahl von 2000 rpm (revolutions per minute = Umdrehungen pro Minute) vorgemischt, sodass eine homogene Zusammensetzung entsteht. Anschließend wurde die Zusammensetzung für 3 Minuten bei 900 rpm am Vakuumspeedmixer entgast. Alle der oben genannten Zusammensetzungen wurden wie oben beschrieben hergestellt.

Wie der Tabelle 1 zu entnehmen ist, fehlt bei den Formulierungen F1 bis F4 im Vergleich zu der Referenzformulierung F jeweils ein Bestandteil. In den Zusammensetzungen F1 und F2 wird jeweils nur ein Polymer verwendet (XMAP oder SMP). In der Formulierung F3 fehlt ZnO und in der F4 der Antioxidant.

**Tabelle 1 - Komponente A**

| **Rohstoff** | | **R [Gew.-%]** | **F1 [Gew.-%]** | **F2 [Gew.-%]** | **F3 [Gew.-%]** | **F4 [Gew.-%]** |
|---|---|---|---|---|---|---|
| Weichmacher | | 4,5 | 4,5 | 4,5 | 4,5 | 5,5 |
| Polymer | XMAP | 3,9 | 7,6 | - | 3,9 | 3,9 |
| Polymer | SMP | 3,7 | - | 7,6 | 3,7 | 3,7 |
| Antioxidant | | 1,0 | 1,0 | 1,0 | 1,0 | - |
| Dispergieradditiv | Byk | 1,0 | 1,0 | 1,0 | 1,0 | 1,0 |
| Silan 1 | | 0,2 | 0,2 | 0,2 | 0,2 | 0,2 |
| Silan 2 | | 0,4 | 0,4 | 0,4 | 0,4 | 0,4 |
| Silan 3 | | 0,2 | 0,2 | 0,2 | 0,2 | 0,2 |
| Füllstoff 1 | ZnO | 19 | 19 | 19 | - | 19 |
| Füllstoff 2 | Al₂O₃ | 66 | 66 | 66 | 85 | 66 |
| Farbstoff | | 0,1 | 0,1 | 0,1 | 0,1 | 0,1 |
| Summe | | 100,00 | 100 | 100 | 100 | 100 |

Die in der Tabelle 2 genannten Rohstoffe wurden in einem Speedmixerbecher eingewogen und 30 Sekunden bei einer Drehzahl von 2000 rpm (revolutions per minute = Umdrehungen pro Minute) vorgemischt, sodass eine homogene Zusammensetzung entsteht. Anschließend wurde die Zusammensetzung für 3 Minuten bei 900 rpm am Vakuumspeedmixer entgast. Alle der oben genannten Zusammensetzungen wurden wie oben beschrieben hergestellt.

**Tabelle 2 - Komponente B**

| **Rohstoff** | | **[Gew.-%]** |
|---|---|---|
| Weichmacher | | 12 |
| Dispergieradditiv | Byk | 3 |
| Füllstoff 2 | Al(OH)₃ (D90 <45µm) | 81 |
| Wasser | | 2 |
| Organozinnkatalysator | | 2 |
| Summe | | 100,00 |

Das Mischungsverhältnis nach Volumen der Komponenten A zu B ist 10:1. Bei der Komponente B handelt es sich um eine so genannte Boosterkomponente, die zwei Effekte bringt:
- Zum einen den homogenen Eintrag von Feuchtigkeit in die Komponente A, so dass diese homogen aushärtet. Ohne Komponente B würde die Komponente A in Kontakt mit Luftfeuchtigkeit von außen nach innen aushärten. Aufgrund der sehr langen Diffusionswege, die sich bei einer typischen, großflächigen Aufbringung innerhalb eines Moduls ergeben und der sehr geringen Kontaktfläche der A-Komponente alleine mit der umgebenden Luft, würden Teile der Komponente über sehr lange Zeit unausgehärtet in der Mitte des großflächig eingebrachten hochtemperaturbeständigen Kontakt- und Füllmaterials verbleiben.
- Zum anderen beschleunigt die Zugabe des Katalysators die Kondensationsreaktion der Silanfunktionalitäten.

### Experiment 1 - Untersuchung der Temperaturstabilität mittels TGA-Messungen

In einem Tiegel wurde eine kleine Menge des jeweiligen, für 7 Tage bei RT ausgehärteten Materials mit einer Aufheizrate von 10 K/min aufgeheizt und der Massenverlust der Probe über die Temperatur bestimmt.

Der individuelle Massenverlust wurde bei 280°C, 340°C und 370°C bestimmt.

**Tabelle 3**

| **Formulierung** | **Beschreibung** | **Masseverlust bei 280°C [Gew.-%]** | **Masseverlust bei 340°C [Gew.-%]** | **Masseverlust bei 370°C [Gew.-%]** |
|---|---|---|---|---|
| R | Umfassend alle Bestandteile | 1,67 | 6,25 | 10,41 |
| F1 | ohne SMP | 1,38 | 5,99 | 9,36 |
| F2 | ohne XMAP | 1,90 | 7,95 | 13,76 |
| F3 | ohne ZnO | 1,60 | 6,47 | 10,22 |
| F4 | ohne Antioxidant | 1,79 | 8,24 | 12,59 |

Wie man der Tabelle 3 entnehmen kann, ist die Formulierung R besser als die Formulierungen F2 und F4. Dagegen zeigt die Formulierung F1 ein besseres thermisches Verhalten als die Referenzformulierung und wäre aufgrund der thermischen Eigenschaften zu bevorzugen. Jedoch aufgrund der sehr höheren Viskosität des XMAP ist diese Formulierung allerding nicht mehr in der Anwendung einsetzbar, da die Viskosität der formulierten Komponente zu hoch ist und keine niedrigviskoseren Prepolymere dieses Typs auf dem Markt verfügbar sind.

Ferner zeigt die Formulierung F3 bei den Temperaturen 280 °C und 370 °C ebenfalls ein wenig bessere Werte als die Referenzformulierung. Diese ist aber aufgrund von schlechten Applikations- und Absetzverhalten ebenfalls nicht einsetzbar. Wie in der Beschreibung oben dargelegt, hat Zinkoxid keinen signifikanten Einfluss auf die Temperaturstabilität, jedoch einen enormen Einfluss auf die Applikations- und Absetzverhalten.

Zusammenfassend lässt sich sagen, dass die Referenzformulierung R im Schnitt die besten Eigenschaften aufweist und somit für die Anwendung bevorzugt ist.

### Experiment 2 - Untersuchung der Mechanik

In einem weiteren Experiment wurde die Mechanik der oben genannten Formulierungen nach 7 Tagen Raumtemperaturhärtung und anschließender Alterung für Tage bei 150°C Konstanttemperatur untersucht. Hier wurden Zugfestigkeitsprüfkörper hergestellt, ausgehärtet und nach DIN EN ISO 527 gemessen und die jeweilige Zugfestigkeit und Bruchdehnung aufgezeichnet.

Die gemessenen Werte nach Raumtemperaturhärtung wurden danach verglichen mit den Werten nach Alterung bei 7d 150°C und die relative Mechanik bezogen auf die Initalwerte berechnet.

**Tabelle 4**

| **Formulierung** | **Alterung:** | **Zugfestigkeit [MPa]** | **Bruchdehnung [%]** | **Relatives Verhalten gegenüber 7d RT [%]** | |
|---|---|---|---|---|---|
| | | | | Zugfestigkeit | Bruchdehnung |
| R | 7d RT | 2,10 | 17,4 | | |
| R | 7d RT + 7d 150°C | 1,45 | 11,2 | 69,05% | 64,15% |
| F1 | 7d RT | 1,27 | 16,2 | | |
| F1 | 7d RT + 7d 150°C | 1,83 | 13,7 | 144,74% | 84,62% |
| F2 | 7d RT | 3,38 | 24,7 | | |
| F2 | 7d RT + 7d 150°C | 0,50 | 4,1 | 14,78% | 16,59% |
| F3 | 7d RT | 1,70 | 15,3 | | |
| F3 | 7d RT + 7d | 1,12 | 8,8 | 65,88% | 57,45% |
| | 150°C | | | | |
| F4 | 7d RT | 2,23 | 18,2 | | |
| F4 | 7d RT + 7d 150°C | 5,95 | 1,2 | 266,42% | 6,59% |

Die Formulierung F1 zeigte das beste thermische Alterungsverhalten und zudem die beste Werte in Zugfestigkeit und Bruchdehnung nach thermischer Alterung. Wie schon oben dargelegt, ist jedoch diese Formulierung leider nicht auf dem Gebiet anwendbar aufgrund der zu hohen Viskosität.

Die Formulierung F2 ist zwar was die Viskosität anbelangt sehr gut, jedoch zeigt diese eine starke Versprödung und Zerfall unter Temperaturalterung und somit hierzu als ungeeignet eingestuft werden muss.

Der Einsatz eines Antioxidanz ist zwingend erforderlich, wie die Alterung der Formulierung F3 zeigt. Ohne ein Antioxidant kommt es auch zu einer starken Versprödung und zum Verlust der Bruchdehnung, welche für die Anwendung auch von großer Bedeutung ist.

Wie auch schon bei den TGA-Versuchen zeigt sich, dass der Einsatz von Zinkoxid keinen Einfluss auf das Alterungsverhalten hat, jedoch für ein besseres Applikations- und Absetzverhalen für die Formulierung von Verkaufsprodukten zwingend enthalten sein muss.

## Patentansprüche

1. Hochtemperaturbeständiges Kontakt- und Füllmaterial, das aus einer Komponente A und einer Komponente B besteht, wobei
die Komponente A folgendes aufweist:
1.A) ein auf Polyacrylate basierendes silanfunktionalisiertes Prepolymer oder eine Mischung von silanfunktionalisierten Prepolymeren aufweisend zumindest ein auf Polyacrylate basierendes silanfunktionalisiertes Prepolymer;
2.A) einen Weichmacher, der ein mehrfachfunktioneller Carbonsäureester ist;
3.A) ein Netz- und Dispergieradditiv aufweisend zumindest eine Aminzahl größer >20 mg KOH/g gemessen nach DIN 19645;
4.A) eine Mischung aus funktionalisierten Organosilanen;
5.A) ZnO und einen weiteren wärmeleitfähigen Füllstoff oder ein Gemisch aus mehreren wärmeleitfähigen Füllstoffen; und wobei
die Komponente B folgendes aufweist:
1.B) einen Weichmacher, der ein mehrfachfunktioneller Carbonsäureester ist;
2.B) ein Netz- und Dispergieradditiv aufweisend zumindest eine Aminzahl größer >20 mg KOH/g gemessen nach DIN 19645;
3.B) einen wärmeleitfähigen Füllstoff oder ein Gemisch aus mehreren wärmeleitfähigen Füllstoffen;
4.B) Wasser;
5.B) einen Organometall-Katalysator;
6.B) einen Antioxidant oder ein Gemisch aus mehreren Antioxidanten; und wobei
das Mischungsverhältnis nach Volumen der Komponente A zur Komponente B 1:1 bis 10:1 beträgt.

2. Hochtemperaturbeständiges Kontakt- und Füllmaterial nach Anspruch 1, **dadurch gekennzeichnet, dass** die Mischung von silanfunktionalisierten Prepolymeren zusätzlich zumindest ein auf Polyurethane und / oder Polyol / Diol basierte silanfunktionalisierte Prepolymere aufweist.

3. Hochtemperaturbeständiges Kontakt- und Füllmaterial nach Anspruch 1 oder 2, **dadurch gekennzeichnet, dass** der Weichmacher der Komponente A ein trifunktioneller Carbonsäureester ist.

4. Hochtemperaturbeständiges Kontakt- und Füllmaterial nach einem der Ansprüche 1 bis 3, **dadurch gekennzeichnet, dass** die Komponente A einen Antioxidant oder ein Gemisch aus mehreren Antioxidanten aufweist.

5. Hochtemperaturbeständiges Kontakt- und Füllmaterial nach einem der Ansprüche 1 bis 4, **dadurch gekennzeichnet, dass** die Mischung der funktionalisierten Organosilanen zumindest einen aminofunktionalisierten oder einen vinylfunktionalisierten oder einen epoxyfunktionalisierten Organosilan aufweist.

6. Injizierfähiges thermisches Kontakt- und Füllmaterial nach einem der Ansprüche 1 bis 4, **dadurch gekennzeichnet, dass** die Mischung der funktionalisierten Organosilanen zumindest zwei Organosilane umfasst, die ausgewählt sind aus der Gruppe bestehend aus: einem aminofunktionalisierten, einen vinylfunktionalisierten und einem epoxyfunktionalisierten Organosilan.

7. Injizierfähiges Kontakt- und Füllmaterial nach einem der Ansprüche 1 bis 6, **dadurch gekennzeichnet, dass** mindestens eines der funktionaliserten Organosilane ein oligomeres Silan ist.

8. Hochtemperaturbeständiges Kontakt- und Füllmaterial nach einem der Ansprüche 1 bis 7, **dadurch gekennzeichnet, dass** der wärmeleitfähige Füllstoff ausgewählt ist aus Gruppe bestehend aus: Al(OH)₃ und Al₂O₃.

9. Hochtemperaturbeständiges Kontakt- und Füllmaterial nach einem der Ansprüche 1 bis 8, **dadurch gekennzeichnet, dass** die Mischung der wärmeleitfähigen Füllstoffe Al(OH)₃ und Al₂O₃ aufweist.

10. Hochtemperaturbeständiges Kontakt- und Füllmaterial nach einem der Ansprüche 1 bis 9, **dadurch gekennzeichnet, dass** zumindest einer der wärmeleitfähigen Füllstoffe eine Oberflächenbeschichtung und /oder Oberflächenfunktionalisierung aufweist.

11. Hochtemperaturbeständiges Kontakt- und Füllmaterial nach einem der Ansprüche 1 bis 10, **dadurch gekennzeichnet, dass** die Gesamtmenge der Füllstoffe in den Komponenten A und B 80 bis 95 Gew.-% beträgt, wobei der Anteil an ZnO in der Mischung der Füllstoffe 10 bis 30 Gew.-% beträgt.

12. Hochtemperaturbeständiges Kontakt- und Füllmaterial nach einem der Ansprüche 1 bis 11, **dadurch gekennzeichnet, dass** die Gesamtmenge der Füllstoffe in den Komponenten A und B 80 bis 93 Gew.-% beträgt, wobei der Anteil an ZnO in der Mischung der Füllstoffe 15-25 Gew.-% beträgt.

13. Hochtemperaturbeständiges Kontakt- und Füllmaterial nach einem der Ansprüche 1 bis 12, **dadurch gekennzeichnet, dass** es folgendes aufweist:
3 bis 10 Gew.-% der Mischung von silanfunktionalisierten Prepolymeren, wobei das silanfunktionalisierte Prepolymer basierend auf Polyacrylate bis zu 50 Gew.-% ausmacht,
0,5 bis 5 Gew.-% des Antioxidants,
3 bis 15 Gew.-% des Weichmachers,
0,2 bis 2 Gew.-% des Netz- und Dispergieradditives,
0,5 bis 5 Gew.-% der Organosilane, und
78 bis 93 Gew.-% von ZnO und dem weiteren wärmeleitfähigen Füllstoff oder dem Gemisch aus mehreren wärmeleitfähigen Füllstoffen, wobei der Anteil an ZnO in der Mischung der Füllstoffe bis zu 10-30 Gew.-% beträgt.

14. Hochtemperaturbeständiges Kontakt- und Füllmaterial nach einem der Ansprüche 1 bis 13, **dadurch gekennzeichnet, dass** es folgendes aufweist:
5 bis 9 Gew.-% der Mischung von silanfunktionalisierten Prepolymeren, wobei das silanfunktionalisierte Prepolymer basierend auf Polyacrylate bis zu 50 Gew.-% ausmacht,
0,5 bis 1,5 Gew.-% des Antioxidants,
3 bis 5 Gew.-% des Weichmachers,
0,5 bis 1,5 Gew.-% des Netz- und Dispergieradditives,
0,5 bis 1,5 Gew.-% der Organosilane, und
80 bis 93 Gew.-% von ZnO und dem weiteren wärmeleitfähigen Füllstoff oder dem Gemisch aus mehreren wärmeleitfähigen Füllstoffen, wobei der Anteil an ZnO in der Mischung der Füllstoffe bis zu15-25 Gew.-% beträgt.

15. Hochtemperaturbeständiges Kontakt- und Füllmaterial nach einem der Ansprüche 1 bis 14, **dadurch gekennzeichnet, dass** es silikonfrei ist.

16. Verwendung des hochtempereturbeständigen Kontakt- und Füllmaterials nach einem der Ansprüche 1 bis 15 für elektronische Bauteile mit einer hohen thermischen Beanspruchung.

17. Verwendung des hochtempereturbeständigen Kontakt- und Füllmaterials nach einem der Ansprüche 1 bis 15 für Batteriesysteme mit einem komplexen Akkumulatoraufbau.
